# FASCICULE DE BREVET EUROPEEN

(11) **EP 1 980 386 B1**
(45) Date de publication et mention de la délivrance du brevet: **20.05.2009**
(21) Numéro de dépôt: 08103458.9
(22) Date de dépôt: 09.04.2008
(51) Int. Cl.: B29C 49/58, B29C 49/56

(54) **Dispositif de moulage pour la fabrication de récipients thermoplastiques par soufflage ou étirage-soufflage**
Formvorrichtung für die Herstellung von thermoplastischen Behältern durch Blasen oder Streckblasen
Moulding device for the production of thermoplastic containers by blowing or stretching-blowing

(30) Priorité: 13.04.2007 FR 0702695
(43) Date de publication de la demande: 15.10.2008
(73) Titulaire: Sidel Participations, 76930 Octeville Sur Mer (FR)
(72) Inventeur: Rousseau, Nicolas Sidel Participations, 76930 Octeville-sur-Mer (FR); Danel, Laurent Sidel Participations, 76930 Octeville-sur-Mer (FR)
(74) Mandataire: Cabinet Plasseraud

(56) Documents cités:
- WO-A-97/13632
- GB-A- 2 388 364
- JP-A- 3 178 420
- US-A- 4 299 549

## Description

La présente invention concerne d'une façon générale le domaine de la fabrication de récipients en matière thermoplastique par soufflage ou étirage-soufflage de préformes chaudes dans un moule auquel est associé un ensemble de soufflage, et elle concerne plus précisément des perfectionnements apportés aux dispositifs de moulage pour la fabrication de récipients en matière thermoplastique par soufflage ou étirage-soufflage de préformes chaudes dans un moule auquel est associé un ensemble de soufflage, ledit moule comprenant au moins deux demi-moules déplaçables l'un par rapport à l'autre entre une position d'ouverture dans laquelle les deux demi-moules sont écartés l'un de l'autre et une position de fermeture dans laquelle les deux demi-moules sont accolés l'un contre l'autre selon un plan de joint et définissent une cavité intérieure de moulage, ledit ensemble de soufflage incluant une tuyère de soufflage et étant déplaçable axialement au-dessus dudit moule entre une position relevée dans laquelle l'extrémité de la tuyère est élevée au-dessus du moule et une position abaissée ou position de soufflage dans laquelle l'extrémité de la tuyère est en communication fluidique avec une préforme supportée dans la cavité du moule.

Dans la configuration des moules de soufflage comprenant deux demi-moules mutuellement déplaçables (le moule pouvant en outre comprendre une troisième partie formée par un fond de moule fixe ou mobile axialement), les deux demi-moules sont fermement solidarisés l'un à l'autre lors du soufflage. Ainsi, dans les moules du type portefeuille couramment exploités dans les installations commercialisées par la Demanderesse, les deux demi-moules sont articulés en rotation sur un axe commun parallèle à un côté (situé à l'arrière) du plan de joint, tandis qu'en position de fermeture du moule des moyens de verrouillage solidarisent mécaniquement les deux demi-moules le long du côté opposé (situé sur l'avant) du plan de joint.

Toutefois, malgré la très grande rigidité mécanique présentée, en position de fermeture, par les moules ainsi agencés, il arrive fréquemment, compte tenu des pressions élevées de soufflage couramment mises en oeuvre (de l'ordre de 40x10⁵ Pa en pratique), que les deux demi-moules s'écartent l'un de l'autre (bâillement) à la partie supérieure du plan de joint, sur la face supérieure du moule qui présente l'ouverture de passage du col du récipient traité (à la partie inférieure du moule, la présence du fond de moule, solidarisé aux deux demi-moules par des moyens d'assemblage à gorge et nervure, évite cet inconvénient).

Certes, cet inconvénient est mis à profit puisque ce peut être notamment par ce bâillement que l'on fait évacuer l'air remplissant la cavité de moulage qui est refoulé par l'augmentation de volume du récipient lors du soufflage. Au surplus, il est de pratique courante que les bords des faces supérieures de contact des demi-moules, qui constituent la partie supérieure du plan de joint, soient spécifiquement usinés pour faciliter le dégazage par cette voie.

Il n'en demeure pas moins que ce bâillement en partie haute du moule constitue un inconvénient que les praticiens ont toujours souhaité éviter, l'air de dégazage de la cavité de moulage devant pouvoir être évacué par d'autres voies (par exemple canaux de dégazage usinés à travers la paroi des demi-moules).

Le document WO 97/013632 divulgue une installation de moulage de récipients par étirage-soufflage de préformes, dans laquelle un support tubulaire monobloc, recevant le col de la préforme pour supporter ladite préforme, est propre à s'emboîter dans un logement complémentaire défini par les deux demi-moules en position de fermeture afin que lesdits demi-moules maintiennent le support et le col de la préforme lors du processus de moulage par étirage-soufflage. Toutefois, ce document n'évoque pas le problème d'un bâillement du moule en présence de la pression de soufflage et a fortiori ne donne aucun enseignement technique propre à remédier à ce problème.

L'invention a précisément pour objet de remédier à cet inconvénient notoire et de proposer une solution technique originale propre à répondre aux attentes de la pratique.

A ces fins, l'invention propose un dispositif de moulage tel qu'exposé au préambule qui, étant agencé conformément à l'invention, se caractérise en ce que les deux demi-moules comportent, sur ou au voisinage de leurs faces respectives tournées vers la tuyère de soufflage, deux parties respectives qui, dans la position de fermeture du moule, définissent ensemble un élément de type mâle bordé extérieurement au moins en partie par une paroi latérale inclinée en direction de la tuyère de soufflage et en ce que l'ensemble de soufflage comporte un élément de type femelle qui est bordée intérieurement au moins en partie par une paroi latérale inclinée complémentairement à l'inclinaison de la paroi latérale dudit élément de type mâle et qui est dimensionnée pour être propre, en position de soufflage de l'ensemble de soufflage, à enserrer étroitement ledit élément de type mâle du moule fermé.

Grâce à cet agencement, l'élément de type femelle, en position de fermeture du moule, vient coiffer l'élément de type mâle et, du fait de la coopération des surfaces inclinées respectives, force les parties hautes des deux demi-moules l'une vers l'autre et assume une véritable fonction de verrou mécanique auxiliaire qui complète, dans le haut du moule, l'action de verrouillage procuré par les moyens de verrouillage traditionnels disposés latéralement.

Au surplus, les moyens spécifiques mis en oeuvre dans le cadre de l'invention sont peu complexes aussi bien à fabriquer qu'à entretenir et il n'en résulte pas de modification sensible de l'architecture et du fonctionnement du dispositif de moulage.

De façon avantageuse, on prévoit que la paroi latérale extérieure de l'élément de type mâle du moule comprend au moins deux portions tronconiques sensiblement en arc de cercle et mutuellement positionnées angulairement de façon sensiblement équidistante et que la paroi latérale intérieure de l'élément de type femelle de l'ensemble de soufflage comprend au moins deux portions tronconiques sensiblement en arc de cercle et mutuellement positionnées angulairement de façon sensiblement équidistante en coïncidence avec les susdites portions tronconiques respectives de la paroi latérale de l'élément de type mâle. On assure ainsi que les efforts de rapprochement exercés sur les parties hautes des deux demi-moules possèdent des résultantes respectives radiales et colinéaires, conduisant à un verrouillage bien équilibré des deux demi-moules.

En pratique, on pourra de façon simple faire en sorte que la paroi latérale extérieure de l'élément de type mâle du moule comprenne deux portions tronconiques sensiblement en arc de cercle et sensiblement diamétralement opposées de façon sensiblement symétrique par rapport au plan de joint du moule et que la paroi latérale intérieure de l'élément de type femelle de l'ensemble de soufflage comprenne deux portions tronconiques sensiblement en arc de cercle et sensiblement diamétralement opposées en coïncidence avec les susdites portions respectives de la paroi latérale de l'élément de type mâle.

Dans un mode de réalisation simple qui n'entraîne pas de modification profonde dans la conformation du moule, on pourrait certes faire en sorte que l'élément de type mâle soit constitué par la partie supérieure du moule lui-même et que ladite paroi latérale inclinée en direction de la tuyère de soufflage soit formée simplement par la paroi externe de la partie supérieure du moule en position de fermeture, et que l'élément de type femelle soit dimensionné pour coiffer au moins partiellement la partie supérieure du moule en position de fermeture. Bien qu'un tel mode de réalisation soit en principe possible, l'élément de type femelle devrait alors posséder des dimensions importantes, supérieures à la dimension transversale de la partie haute du moule : il en résulterait, en conjonction avec son déplacement lors du mouvement de la tuyère, la nécessité de disposer d'un espace libre volumineux au-dessus du moule alors que, dans les installations du genre concerné, il y a peu de place disponible.

Dans ces conditions, on pourra avoir recours de préférence à un autre mode de réalisation, peu complexe à mettre en oeuvre, qui est actuellement la solution préférée par la Demanderesse, qui consiste en ce que l'élément de type mâle est constitué par une protubérance définie, dans la position de fermeture du moule, par deux saillies prévues sur les faces respectives des demi-moules tournées vers la tuyère de soufflage et en ce que ladite paroi latérale inclinée en direction de la tuyère de soufflage est formée par les deux faces latérales respectives desdites saillies dans la position de fermeture du moule.

Dans ce dernier cas, dans les dispositifs équipés d'une tuyère du type tuyère-cloche, on peut faire en sorte avantageusement que la protubérance du moule soit en forme générale de plateau et constitue une plaque d'appui pour la cloche de la tuyère en position de soufflage. Dans la configuration, couramment exploitée dans les dispositifs de moulage produits par la Demanderesse, consistant en ce que chaque demi-moule comprend une demi-coquille interne et une équerre externe supportant la demi-coquille, on peut prévoir que les saillies soient solidarisées aux demi-coquilles respectives.

Dans encore un autre mode de réalisation, qui est également simple et peu complexe à mettre en oeuvre, on prévoit que l'élément de type mâle soit constitué par un plot défini, dans la position de fermeture du moule, par deux demi-gorges prévues sur les faces respectives des demi-moules tournées vers la tuyère de soufflage et que ladite paroi latérale inclinée en direction de la tuyère de soufflage soit formée par les deux faces radialement intérieures desdites demi-gorges dans la position de fermeture du moule. Dans le cas, courant dans nombre d'installations de soufflage produites par la Demanderesse, où chaque demi-moule comprend une demi-coquille interne et une équerre externe supportant la demi-coquille, on peut avantageusement prévoir que les demi-gorges soient disposées dans les équerres respectives.

Dans un exemple de réalisation pratique, l'ensemble de soufflage peut comporter une platine entourant la partie terminale de tuyère et l'élément de type femelle peut être solidaire de ladite platine. Dans ce cas, on peut avantageusement constituer un agencement symétrique en prévoyant que l'élément de type femelle formé par la bride soit constitué en deux pièces de bridage comportant respectivement les susdites deux portions tronconiques sensiblement en arc de cercle et que les deux pièces de bridage scient supportées par la platine de façon diamétralement opposée.

Dans un exemple pratique de réalisation, il est intéressant que la platine, d'une part, et l'élément femelle formé par la bride ou chaque pièce de bridage, d'autre part, soient constituées en des métaux différents, notamment respectivement en aluminium et en acier, la platine pouvant quant à elle se présenter sous forme d'une pièce massive.

L'invention sera mieux comprise à la lecture de la description détaillée qui suit de certains modes de réalisation préférés donnés uniquement à titre d'exemples purement illustratifs. Dans cette description, on se réfère aux dessins annexés sur lesquels :
- la figure 1 est une vue en coupe d'une partie d'un dispositif de moulage visé par l'invention, montrant, dans une première position fonctionnelle, un mode de réalisation préféré des parties respectives du moule et de la tuyère de soufflage appelées à coopérer mutuellement qui sont agencées conformément à l'invention ;
- la figure 2 est une vue en coupe des parties du dispositif de moulage de la figure 1 montrées dans une seconde position fonctionnelle ;
- les figures 3 et 4 sont des vues en coupe, analogues à celle de la figure 1, montrant deux autres modes de réalisation possibles conformes à l'invention.

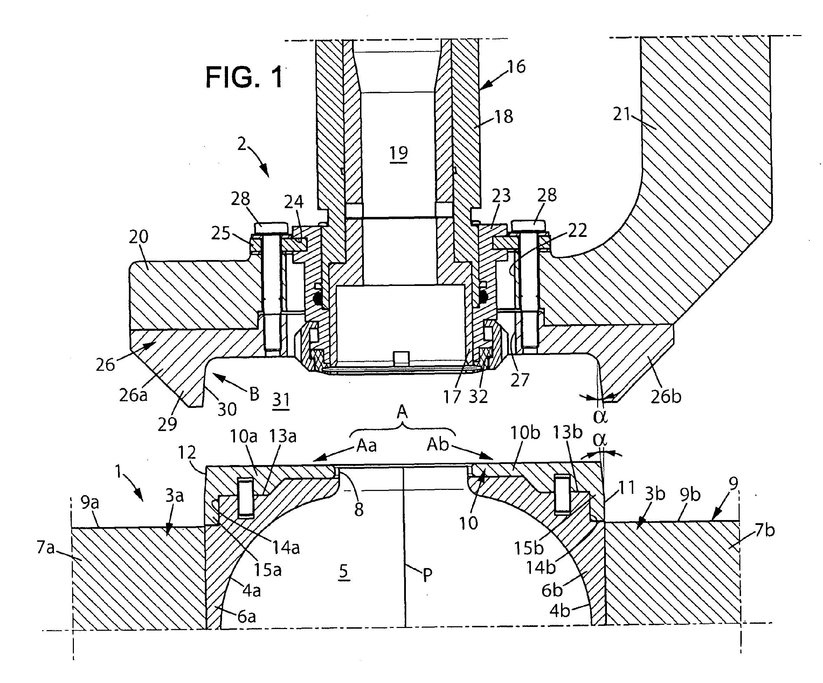

On se réfère tout d'abord à la figure 1 sur laquelle seules sont montrées les parties mutuellement coopérantes d'un dispositif de moulage pour la fabrication de récipients, notamment de bouteilles, flacons, bidons, etc., en matière thermoplastique telle que du PET, par soufflage ou étirage-soufflage de préformes chaudes, qui sont nécessaires à la compréhension de l'invention.

A la figure 1, les parties concernées par l'invention comprennent respectivement un moule désigné dans son ensemble par la référence numérique 1 et un ensemble de soufflage désigné dans son ensemble par la référence numérique 2. Le moule 1 et l'ensemble 2 de soufflage sont montrés dans une première position fonctionnelle dans laquelle ils sont écartés l'un de l'autre, l'ensemble de soufflage étant en position relevée par rapport au moule, tandis que le moule est montré en position fermée pour faciliter la compréhension. Autrement dit, le moule 1 et l'ensemble 2 de soufflage sont montrés dans une position précédant immédiatement ou suivant immédiatement la phase de soufflage (le récipient enfermé dans le moule n'étant pas montré).

Pour ce qui concerne tout d'abord le moule 1, seule est montrée sa partie supérieure seule concernée par l'invention. La mise en oeuvre des dispositions de l'invention qui seront exposées plus loin est indépendante de la structure du moule et le moule peut donc être de tout type connu. A la figure 1 est illustré à titre d'exemple un type de moule couramment utilisé par la Demanderesse dans les installations qu'elle produit, à savoir un moule du type dit « moule portefeuille ». Un tel moule comprend généralement au moins deux demi-moules 3a, 3b qui comportent intérieurement des demi-empreintes 4a, 4b respectives et qui sont déplaçables l'un par rapport à l'autre par rotation autour d'un axe (non visible sur le dessin) entre une position d'ouverture dans laquelle les deux demi-moules 3a, 3b sont écartés angulairement l'un de l'autre et une position de fermeture (montrée à la figure 1) dans laquelle les deux demi-moules 3a, 3b sont accolés l'un contre l'autre selon un plan de joint P, les deux demi-empreintes 4a, 4b réunies formant alors une cavité 5 intérieure de moulage. Les demi-empreintes sont agencées pour que la cavité 5 soit ouverte sur l'extérieur par une ouverture 8 de réception de la collerette du récipient ou de la préforme.

Toujours à titre d'exemple et comme c'est le cas pour la plupart des moules utilisés par la Demanderesse dans les installations qu'elle produit actuellement, dans le moule 1 montré à la figure 1 chaque demi-moule 3a, 3b est formé en deux pièces étroitement assemblées, à savoir une demi-coquille respectivement 6a, 6b disposée intérieurement et comportant la demi-empreinte respectivement 4a, 4b correspondante précitée (les demi-coquilles pouvant être en un métal léger tel qu'un alliage d'aluminium) et un porte-coquille ou équerre respectivement 7a, 7b situé extérieurement et qui (étant constitué par exemple en acier) constitue la structure rigide et mécaniquement résistante du demi-moule. Les demi-coquilles 6a, 6b sont solidarisées aux équerres 7a, 7b respectives par des moyens de fixation rapide (non montrés) permettant un montage/démontage rapide.

Conformément à l'invention, les deux demi-moules 3a, 3b comportent, sur ou au voisinage de leurs faces 9a, 9b respectives tournées vers la tuyère 16 de soufflage, deux parties Aa, Ab respectives qui, dans la position de fermeture du moule, définissent ensemble un élément A de type mâle bordé extérieurement au moins en partie par une paroi 11 latérale inclinée en direction de la tuyère 16 de soufflage. De plus, l'ensemble 2 de soufflage comporte un élément B de type femelle qui est bordé intérieurement au moins en partie par une paroi 30 latérale inclinée complémentairement à l'inclinaison de la paroi 11 latérale dudit élément A de type mâle et qui est dimensionnée pour être propre, en position de soufflage de l'ensemble 2 de soufflage, à enserrer étroitement ledit élément A de type mâle du moule 1 fermé.

Grâce à cet agencement, la coopération de l'élément B de type femelle et de l'élément A de type mâle procure un verrouillage de la partie haute du moule 1 en position de fermeture.

On va maintenant décrire de façon plus détaillée quelques modes de réalisation possibles de moyens agencés conformément à l'invention.

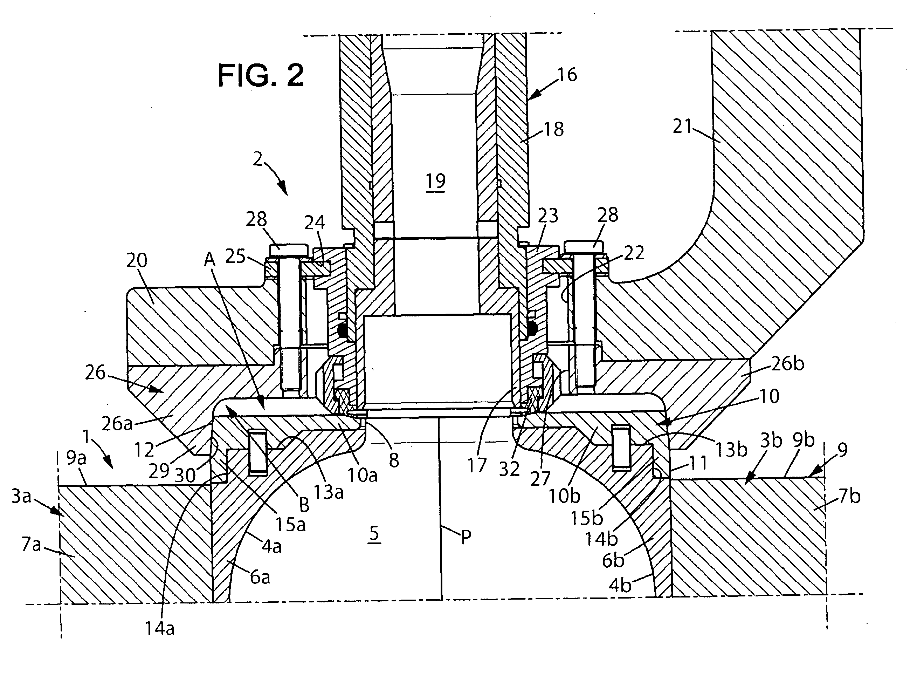

Aux figures 1 et 2 est représenté un mode de réalisation que, présentement, la Demanderesse tient pour le meilleur mode de réalisation, et qui est donc préféré aujourd'hui. Dans cet agencement, la face 9 supérieure du moule est pourvue d'une protubérance 10 qui est agencée symétriquement de part et d'autre du plan de joint P et qui est bordée extérieurement par une paroi 11 latérale, laquelle comprend au moins une portion 12 de surface qui est inclinée sur la verticale vers le haut, c'est-à-dire en direction de l'ensemble 2 de soufflage. L'angle α d'inclinaison peut être relativement faible, c'est-à-dire inférieur à environ 20° et typiquement de l'ordre de la dizaine de degrés. C'est cette protubérance 10 qui constitue l'élément A de type mâle précité.

La protubérance 10 peut présenter un contour de toute forme souhaitable, mais de préférence ce contour est circulaire, de sorte que la susdite portion 12 de surface de la paroi 11 latérale de la protubérance 10 est tronconique avec une conicité de demi-angle α au sommet. Le contour circulaire peut être continu ou bien plus avantageusement être discontinu et formé d'arcs de cercle. Compte tenu de l'agencement du moule sous forme de deux demi-moules 3a, 3b, la protubérance 10 est constituée par la réunion d'un ensemble de plusieurs saillies prévues sur les faces 9a, 9b supérieures respectives des demi-moules 3a, 3b et mutuellement positionnées angulairement de façon sensiblement équidistante selon une symétrie impaire ou de préférence selon une symétrie paire par rapport au plan de joint P.

De façon plus précise dans l'exemple concret de réalisation illustré à la figure 1, la protubérance 10 est formée par la réunion de deux saillies 10a, 10b portées respectivement par les deux demi-moules 3a, 3b ; la paroi 11 latérale de la protubérance 10 présente alors deux portions 12 de surface tronconiques disposées de façon diamétralement opposée symétriquement par rapport au plan de joint P, la protubérance 10 pouvant même être inexistante au voisinage du plan de joint. Ce sont ces deux saillies 10a, 10b qui constituent les deux susdites parties Aa, Ab, respectivement.

Dans la structure du moule plus particulièrement illustrée à la figure 1 à titre d'exemple, les deux saillies 10a, 10b sont prévues sur les faces 13a, 13b supérieures respectives des deux demi-coquilles 6a, 6b.

Les saillies 10a, 10b peuvent certes être formées de façon intégrale respectivement dans les parties hautes des demi-moules 3a, 3b, et notamment des demi-coquilles 6a, 6b dans l'exemple illustré à la figure 1. Toutefois, il peut s'avérer plus avantageux, notamment dans le cas où l'ensemble de soufflage comprend une tuyère du type dit tuyère-cloche, de constituer les saillies 10a, 10b sous forme de pièces rapportées sur les faces supérieures respectives des demi-moules, notamment des demi-coquilles 6a, 6b comme montré à la figure 1. Ainsi, il est possible de donner aux saillies 10a, 10b une dimension radiale suffisante pour que, dans la position de fermeture du moule et lors du soufflage, la protubérance 10 puisse se présenter sous forme d'un plateau propre à servir simultanément de plaque d'appui pour une tuyère-cloche comme représenté à la figure 1.

Il est souhaitable, pour assurer une bonne reprise des efforts radiaux, que les demi-moules 3a, 3b et les saillies 10a, 10b soient munis d'épaulements respectifs coopérants dirigés radialement. Ainsi, comme montré dans le mode de réalisation de la figure 1, les demi-moules 3a, 3b, et plus particulièrement les demi-coquilles 6a, 6b dans cet exemple, présentent, sur leur bord supérieur, des épaulements 14a, 14b respectifs tournés vers l'extérieur et diamétralement opposés selon une direction sensiblement perpendiculaire au plan de joint P. De façon complémentaire, les deux saillies 10a, 10b se terminent, sur leur bord extérieur, par des jupes 15a, 15b respectives saillant vers le bas et venant s'emboîter dans les épaulements respectifs 14a, 14b.

Au surplus, et de façon particulièrement intéressante dans le cas où le moule incorpore des demi-coquilles 6a, 6b en métal léger tel que l'alliage d'aluminium, la réalisation des saillies 10a, 10b sous forme de pièces indépendantes rapportées permet de les constituer en matériau mécaniquement très résistant, par exemple en acier, les rendant aptes à assurer efficacement leur(s) fonction(s).

L'ensemble 2 de soufflage est, à titre d'exemple, illustré à la figure 1 dans une configuration de tuyère dite tuyère-cloche qui actuellement équipe bon nombre des installations produites par la Demanderesse. Mais il doit être entendu que les dispositions conformes à l'invention peuvent être mises en oeuvre en conjonction avec un ensemble de soufflage pourvu d'une tuyère d'un autre type, par exemple une tuyère à appui sur le col ou le buvant du récipient.

La pièce terminale de la tuyère (laquelle est désignée dans son ensemble par la référence numérique 16) est configurée en cloche 17 supportée à l'extrémité d'une tige 18 tubulaire déplaçable sensiblement axialement par des moyens d'entraînement non montrés. L'intérieur 19 de la tige 18 constitue un conduit d'amenée du fluide de soufflage et de façon classique abrite une tige d'étirage mobile axialement (non montrée). L'agencement du reste de l'ensemble de soufflage n'entre pas en ligne de compte dans le contexte de l'invention et peut donc être quelconque.

Une platine 20 entoure la partie inférieure de la tuyère 16 à laquelle elle est solidarisée mécaniquement, la platine 20 étant en outre rendue solidaire d'une colonne 21 appartenant à l'équipage mobile verticalement de l'ensemble de soufflage. Dans l'exemple de réalisation illustré à la figure 1, la platine 20 est réalisée de façon intégrale avec la colonne 21 dont elle constitue la partie terminale, la platine 20 ayant une étendue générale sensiblement perpendiculaire à l'étendue axiale de la colonne 21 ; la platine 20 possède, disposée approximativement centralement, une ouverture 22 traversante à travers laquelle est engagée 1a partie terminale de la tuyère 16, et en particulier la cloche 17.

A titre d'exemple, la solidarisation de l'extrémité inférieure de la tuyère 16 à la platine 20 peut être assurée de la façon suivante. L'extrémité inférieure de la tuyère 16 est pourvue d'un carter 23 annulaire externe muni d'une gorge 24 annulaire recevant une bague 25 plate saillant radialement vers l'extérieur en s'étendant jusqu'au-dessus de la platine 20.

Sur la face inférieure de la platine 20 est fixé l'élément B de type femelle qui peut, de façon très avantageuse et préférée, être constitué sous forme d'une bride 26, ladite bride 26 étant de forme annulaire et présentant une ouverture 27 centrale traversante en coïncidence coaxiale et dimensionnelle avec l'ouverture 22 de la platine 20.

La bague 25, la platine 20 et la bride 26 sont pourvues de trous respectifs mutuellement alignés et répartis sur le pourtour de ces pièces, et des organes filetés 28 engagés à travers ces trous alignés assurent l'assemblage mécanique de la bague 25 (et donc de la tuyère 16) à la platine 20 tout en solidarisant la bride 26 à la platine 20.

La bride 26 présente une jupe 29 dirigée vers le bas et s'étendant sur au moins une partie du pourtour de la bride 26. La jupe 29 possède une face 30 latérale tournée vers l'intérieur qui est inclinée en s'écartant de la verticale du même angle α que la portion 12 de surface de la paroi 11 latérale de la protubérance 10. Ainsi, la jupe 29 définit, à l'extrémité de la tuyère 16, une partie 31 en creux qui est dimensionnée et conformée complémentairement à la protubérance 10.

En pratique, la bride 26 peut être constituée d'une façon générale sous forme d'une pièce unitaire. La bride 26 peut aussi être constituée de la même manière que la protubérance 10, sous forme de plusieurs pièces mutuellement positionnées angulairement de façon sensiblement équidistante et disposées selon une symétrie impaire ou de préférence selon une symétrie paire par rapport au plan de joint ; ainsi, dans l'exemple de réalisation plus particulièrement pris en considération en relation avec la figure 1, la bride 26 est constituée sous forme de deux pièces de bridage 26a, 26b qui sont supportées par la platine 20 de façon diamétralement opposée, en regard respectivement des deux saillies 10a, 10b constituant la protubérance 10. Les deux pièces de bridage 26a, 26b comportent respectivement deux portions de paroi 30 latérale tronconiques s'étendant sensiblement en arc de cercle.

A la figure 2, le moule 1 et l'ensemble 2 de soufflage sont montrés dans une seconde position fonctionnelle qui est la position occupée lors du soufflage: l'ensemble 2 de soufflage est abaissé de sorte que le bord frontal de la cloche 17 de la tuyère 16 est plaqué de façon étanche (présence d'un joint 32 d'étanchéité sur le bord frontal de la cloche 17) contre la face supérieure 9 du moule 1.

Au cours du déplacement de l'ensemble 2 de soufflage, en même temps que la cloche 17 a été abaissée au contact étanche du moule 1, l'élément B de type femelle formé par la bride 26 a été amené sur l'élément A de type mâle ici constitué par la protubérance 10 qu'il coiffe avec emboîtement étroit des faces 30 et 12 latérales inclinées respectivement.

Dans ces conditions, lorsque le fluide de soufflage sous haute pression (typiquement de l'ordre de 40x10⁵ Pa) est introduit dans le récipient disposé dans la cavité 5 de moulage, l'écartement des deux demi-moules 3a, 3b est empêché non seulement par les moyens habituellement prévus à cet effet (bilatéralement par les équerres 7a, 7b articulées sur leur axe de rotation et à l'opposé par des organes de verrouillage spécifiques, vers le bas par le fond de moule), mais au surplus vers le haut du fait de l'emboîtement de la bride 26 sur la protubérance 10. Dans ces conditions, les deux demi-moules 3a, 3b restent parfaitement accolés sur la totalité du plan de joint P et il en résulte des récipients mieux finis présentant une trace de plan de joint moins marquée.

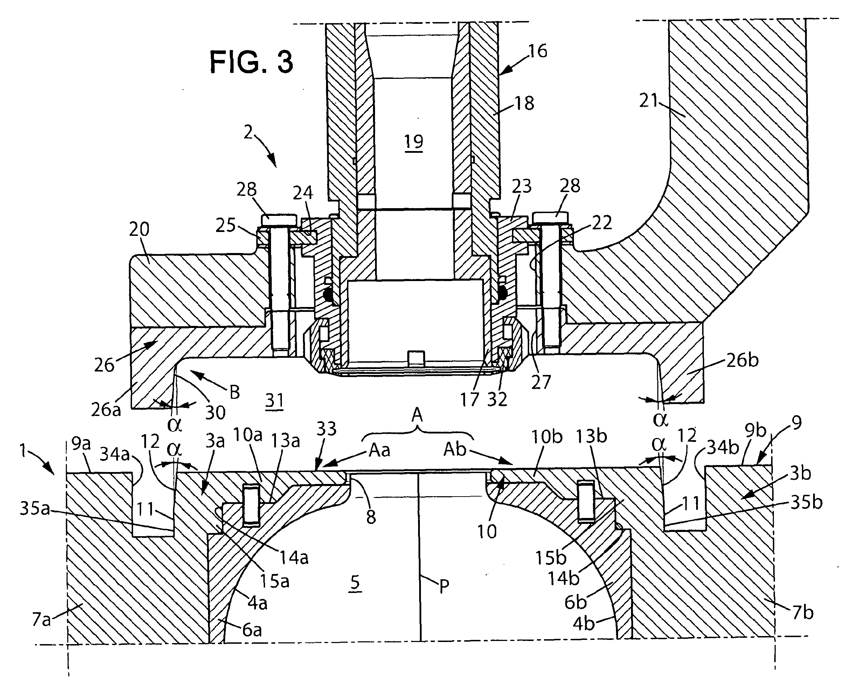

A la figure 3 est représenté un autre mode de réalisation dans lequel l'élément A de type mâle est constitué par un plot 33 défini, dans la position de fermeture du moule, par deux demi-gorges 34a, 34b creusées dans les faces 9a, 9b respectives des demi-moules 3a, 3b qui sont tournées vers la tuyère 16 de soufflage. La paroi 11 latérale inclinée en direction de la tuyère 16 de soufflage est formée par les deux faces 35a, 35b radialement intérieures desdites demi-gorges 34a, 34b dans la position de fermeture du moule.

On comprend que le mode de réalisation de la figure 3 constitue une variante proche du mode de réalisation des figures 1 et 2 : au lieu d'être, comme la protubérance 10, en saillie sur la face 9 du moule, le plot 33 est encastré dans le moule avec sa face supérieure au même niveau que la face 9 du moule. Les demi-gorges 34a, 34b fournissent le dégagement nécessaire pour que la bride 26 puisse venir s'emboîter sur la paroi 11.

Dans le cas, courant dans nombre d'installations de soufflage produites par la Demanderesse, où chaque demi-moule 3a, 3b comprend une demi-coquille 6a, 6b interne et une équerre 7a, 7b externe supportant la demi-coquille 6a, 6b, les demi-gorges 34a, 34b peuvent être prévues dans les équerres 7a, 7b respectives, comme montré à la figure 3.

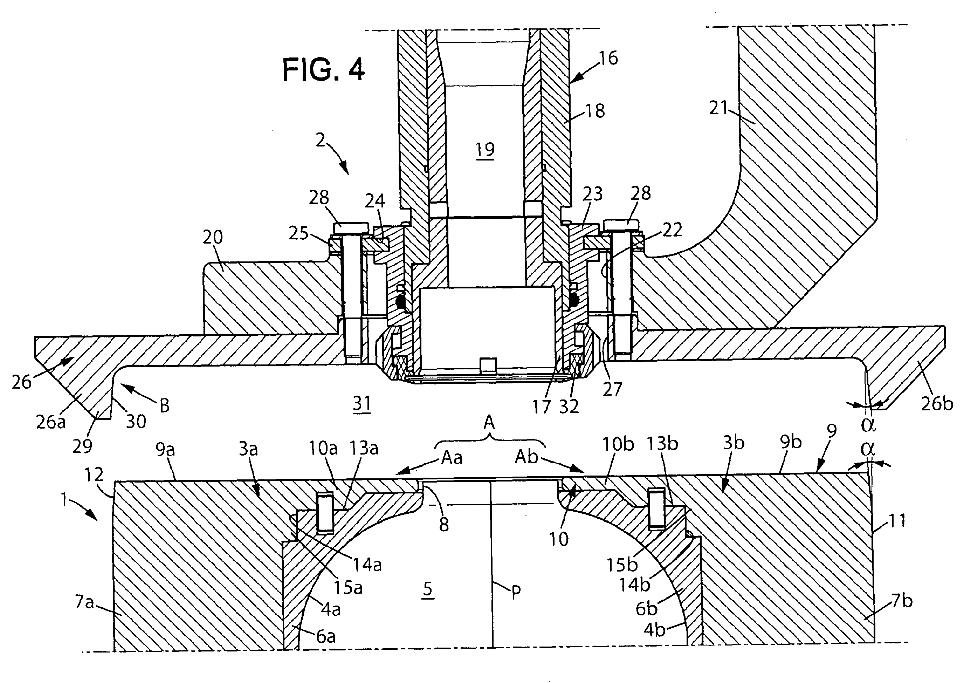

A la figure 4 est représenté encore un autre mode de réalisation possible, dans lequel l'élément A de type mâle est constitué par la partie supérieure du moule lui-même et la paroi 11 latérale inclinée en direction de la tuyère 16 de soufflage est simplement formée par la paroi externe de la partie supérieure du moule en position de fermeture. L'élément B de type femelle formé par la bride 26 peut, quant à lui, être identique à ce qui a été indiqué plus haut en regard des figures 1 et 2, à ceci près qu'il est ici dimensionné pour coiffer au moins partiellement la partie supérieure du moule en position de fermeture.

Il s'agisse là d'un agencement parfaitement réalisable et intéressant en ce sens qu'il ne nécessite qu'une adaptation minime du moule (usinage des portées coniques 12). Cependant, on conçoit que dans la pratique il soit relativement difficile à mettre en oeuvre en raison de l'encombrement excessif de l'élément B de type femelle formé par la bride 26. Non seulement cet élément est volumineux du fait de sa dimension qui doit être supérieure à la dimension transversale de la partie haute du moule pour être à même de coiffer celle-ci, mais en outre il est nécessaire de disposer au-dessus du moule d'un espace libre important pour l'évolution de l'élément B qui accompagne la tuyère dans ses déplacements verticaux. Or les installations du genre visé par l'invention regroupe un grand nombre de composants et il ne subsiste que peu de place libre, en particulier au-dessus des moules.

## Revendications

1. Dispositif de moulage pour la fabrication de récipients en matière thermoplastique par soufflage ou étirage-soufflage de préformes chaudes dans un moule (1) auquel est associé un ensemble (2) de soufflage, ledit moule (1) comprenant au moins deux demi-moules (3a, 3b) déplaçables l'un par rapport à l'autre entre une position d'ouverture dans laquelle les deux demi-moules (3a, 3b) sont écartés l'un de l'autre et une position de fermeture dans laquelle les deux demi-moules (3a, 3b) sont accolés l'un contre l'autre selon un plan de joint (P) et définissent une cavité (5) intérieure de moulage, ledit ensemble (2) de soufflage incluant une tuyère (16) de soufflage et étant déplaçable axialement au-dessus dudit moule (1) entre une position relevée dans laquelle l'extrémité de la tuyère (16) est élevée au-dessus du moule (1) et une position abaissée ou position de soufflage dans laquelle l'extrémité de la tuyère (16) est en communication fluidique avec une préforme supportée dans la cavité (5) du moule, **caractérisé**
**en ce que** les deux demi-moules (3a, 3b) comportent, sur ou au voisinage de leurs faces (9a, 9b) respectives tournées vers la tuyère (16) de soufflage, deux parties (Aa, Ab) respectives qui, dans la position de fermeture du moule, définissent ensemble un élément (A) de type mâle bordé extérieurement au moins en partie par une paroi (11) latérale inclinée en direction de la tuyère (16) de soufflage et
**en ce que** l'ensemble (2) de soufflage comporte un élément (B) de type femelle qui est bordé intérieurement au moins en partie par une paroi (30) latérale inclinée complémentairement à l'inclinaison de la paroi (11) latérale dudit élément (A) de type mâle et qui est dimensionnée pour être propre, en position de soufflage de l'ensemble (2) de soufflage, à enserrer étroitement ledit élément (A) de type mâle du moule (1) fermé,
ce grâce à quoi la coopération de l'élément (B) de type femelle et de l'élément (A) de type mâle procure un verrouillage de la partie haute du moule (1) en position de fermeture.

2. Dispositif de moulage selon la revendication 1, **caractérisé en ce que** la paroi (11) latérale extérieure de l'élément (A) de type mâle du moule (1) comprend au moins deux portions (12) tronconiques sensiblement en arc de cercle et mutuellement positionnées angulairement de façon sensiblement équidistante et **en ce que** la paroi (30) latérale intérieure de l'élément (B) de type femelle de l'ensemble (2) de soufflage comprend au moins deux portions tronconiques sensiblement en arc de cercle et mutuellement positionnées angulairement de façon sensiblement équidistante en coïncidence avec les susdites portions (12) respectives de la paroi (11) latérale de l'élément (A) de type mâle.

3. Dispositif de moulage selon la revendication 2, **caractérisé en ce que** la paroi (11) latérale extérieure de l'élément (A) de type mâle du moule (1) comprend deux portions (12) tronconiques sensiblement en arc de cercle et sensiblement diamétralement opposées de façon sensiblement symétrique par rapport au plan de joint (P) du moule (1) et **en ce que** la paroi (30) latérale intérieure de l'élément (B) de type femelle de l'ensemble (2) de soufflage comprend deux portions tronconiques sensiblement circulaires et sensiblement diamétralement opposés en coïncidence avec les susdites portions (12) tronconiques respectives de la paroi (11) latérale de l'élément (A) de type mâle.

4. Dispositif de moulage selon l'une quelconque des revendications 1 à 3, **caractérisé en ce que** l'élément (B) de type femelle est une bride (26).

5. Dispositif de moulage selon l'une quelconque des revendications 1 à 4, **caractérisé en ce que** l'élément (A) de type mâle est constitué par la partie supérieure du moule et ladite paroi (11) latérale inclinée en direction de la tuyère (16) de soufflage est formée par la paroi externe de la partie supérieure du moule (1) en position de fermeture et **en ce que** l'élément (B) de type femelle est dimensionné pour coiffer au moins partiellement la partie supérieure du moule (1) en position de fermeture.

6. Dispositif de moulage selon l'une quelconque des revendications 1 à 4, **caractérisé en ce que** l'élément (A) de type mâle est constitué par une protubérance (10) définie, dans la position de fermeture du moule (1), par deux saillies (10a, 10b) prévues sur les faces (9a, 9b) respectives des demi-moules tournées vers la tuyère (16) de soufflage et **en ce que** ladite paroi (11) latérale inclinée en direction de la tuyère (16) de soufflage est formée par les deux faces latérales respectives desdites saillies (10a, 10b) dans la position de fermeture du moule (1).

7. Dispositif de moulage selon la revendication 6, dans lequel la tuyère (16) est du type tuyère-cloche, **caractérisé en ce que** la protubérance (10) du moule (1) est en forme générale de plateau et constitue une plaque d'appui pour la cloche (17) de la tuyère (16) en position de soufflage.

8. Dispositif de moulage selon la revendication 6 ou 7, dans lequel chaque demi-moule (3a, 3b) comprend une demi-coquille (6a, 6b) interne et une équerre (7a, 7b) externe supportant la demi-coquille (6a, 6b), **caractérisé en ce que** les saillies (10a, 10b) sont solidarisées aux demi-coquilles (6a, 6b) respectives.

9. Dispositif de moulage selon l'une quelconque des revendications 1 à 4, **caractérisé en ce que** l'élément (A) de type mâle est constitué par un plot (33) défini, dans la position de fermeture du moule (1), par deux demi-gorges (34a, 34b) prévues sur les faces (9a, 9b) respectives des demi-moules (3a, 3b) tournées vers la tuyère (16) de soufflage et **en ce que** ladite paroi (11) latérale inclinée en direction de la tuyère (16) de soufflage est formée par les deux faces (35a, 35b) radialement intérieures desdites demi-gorges (34a, 34b) dans la position de fermeture du moule (1).

10. Dispositif de moulage selon la revendication 9, dans lequel chaque demi-moule (3a, 3b) comprend une demi-coquille (6a, 6b) interne et une équerre (7a, 7b) externe supportant la demi-coquille (6a, 6b), **caractérisé en ce que** les demi-gorges (34a, 34b) sont prévues dans les équerres (7a, 7b) respectives.

11. Dispositif de moulage selon l'une quelconque des revendications 1 à 10, **caractérisé en ce que** l'ensemble (2) de soufflage comporte une platine (20) entourant la partie terminale de la tuyère (16) et **en ce que** l'élément (B) de type femelle est solidaire de ladite platine (20).

12. Dispositif de moulage selon l'ensemble des revendications 3, 4 et 11, **caractérisé en ce que** l'élément (E) de type femelle formé par la bride (26) est constitué en deux pièces de bridage (26a, 26b) comportant respectivement les susdites deux portions (12) tronconiques sensiblement en arc de cercle et **en ce que** les deux pièces de bridage (26a, 26b) sont supportées par la platine (20) de façon diamétralement opposée.

13. Dispositif de moulage selon la revendication 11 ou 12, **caractérisé en ce que** la platine ((20), d'une part, et l'élément (B) de type femelle formé par la bride (26) ou chaque pièce de bridage (26a, 26b), d'autre part, sont constituées en des métaux différents, notamment respectivement en aluminium et en acier.

## Claims

1. Moulding device for the manufacture of thermoplastic containers by blow moulding or stretch-blow moulding of hot preforms in a mould (1) with which a blowing assembly (2) is associated, said mould (1) comprising at least two half-moulds (3a, 3b) movable relative to each other between an open position in which the two half-moulds (3a, 3b) are moved away from each other and a closed position in which the two half-moulds (3a, 3b) are mated against each other along a mold parting plane (P) and define an internal moulding cavity (5), said blowing assembly (2) including a blowing nozzle (16) and being movable axially above said mould (1) between a raised position in which the end of the nozzle (16) is raised above the mould (1) and a lowered position or blowing position in which the end of the nozzle (16) is in fluid communication with a preform supported in the cavity (5) of the mould, **characterized**
**in that** the two half-moulds (3a, 3b) comprise, on or close to their respective faces (9a, 9b) turned towards the blowing nozzle (16), two respective parts (Aa, Ab) which, in the closed position of the mould, together define a male element (A) at least partly bordered externally by a lateral wall (11) inclined towards the blowing nozzle (16), and
**in that** said blowing assembly (2) comprises a female element (B) which is at least partly bordered internally by a lateral wall (30) which is inclined complementarily to the inclination of the lateral wall (11) of said male element (A) and which is dimensioned so as to be able, in the blowing position of the blowing assembly (2), of tightly clamping said male element (A) of the closed mould (1),
whereby the cooperation of the female element (B) and the male element (A) provides the upper part of the mould (1) to be locked in the closed position.

2. Moulding device according to Claim 1, **characterized in that** the outer lateral wall (11) of the male element (A) of the mould (1) comprises at least two frustoconical portions (12) that are substantially circularly arcuate and mutually positioned angularly so as to be substantially equidistant, and **in that** the inner lateral wall (30) of the female element (B) of the blowing assembly (2) comprises at least two frustoconical portions that are substantially circularly arcuate and mutually positioned angularly so as to be substantially equidistant in coincidence with said respective portions (12) of the lateral wall (11) of the male element (A).

3. Moulding device according to Claim 2, **characterized in that** the outer lateral wall (11) of the male element (A) of the mould (1) comprises two frustoconical portions (12) that are substantially circularly arcuate and substantially diametrically opposed so as to be substantially symmetrical relative to the mold parting plane (P) of the mould (1), and **in that** said inner lateral wall (30) of the female element (B) of the blowing assembly comprises two frustoconical portions that are substantially circular and substantially diametrically opposed in coincidence with said respective frustoconical portions (12) of the lateral wall (11) of the male element (A).

4. Moulding device according to any one of Claims 1 to 3, **characterized in that** said female element (B) is a clamp (26).

5. Moulding device according to any one of Claims 1 to 4, **characterized in that** the male element (A) consists of the upper part of the mould and said lateral wall (11) inclined towards the blowing nozzle (16) is formed by the external wall of the upper part of the mould (1) in the closed position, and **in that** said female element (B) is dimensioned so as to at least partly cover the upper part of the mould (1) in the closed position.

6. Moulding device according to any one of Claims 1 to 4, **characterized in that** the male element (A) consists of a protuberance (10) defined, in the closed position of the mould (1), by two projections (10a, 10b) provided on the respective faces (9a, 9b) of the half-moulds which are turned towards the blowing nozzle (16), and **in that** said lateral wall (11) inclined towards the blowing nozzle (16) is formed by the two respective lateral faces of said projections (10a, 10b) in the closed position of the mould (1).

7. Moulding device according to Claim 6, in which the nozzle (16) is of the bell-nozzle type, **characterized in that** the protuberance (10) of the mould (1) is in the general form of a plateau and is a resting plate for the bell (17) of the nozzle (16) in the blowing position.

8. Moulding device according to Claim 6 or 7, in which each half-mould (3a, 3b) comprises an internal half-shell (6a, 6b) and an external brace (7a, 7b) supporting the half-shell (6a, 6b), **characterized in that** the projections (10a, 10b) are fastened to the respective half-shells (6a, 6b).

9. Moulding device according to any one of Claims 1 to 4, **characterized in that** the male element (A) consists of a mounting (33) defined, in the closed position of the mould (1), by two half-grooves (34a, 34b) provided on the respective faces (9a, 9b) of the half-moulds (3a, 3b) and turned towards the blowing nozzle (16), and **in that** said lateral wall (11) inclined towards the blowing nozzle (16) is formed by the two radially inner faces (35a, 35b) of said half-grooves (34a, 34b) in the closed position of the mould (1).

10. Moulding device according to Claim 9, in which each half-mould (3a, 3b) comprises an internal half-shell (6a, 6b) and an external brace (7a, 7b) supporting the half-shell (6a, 6b), **characterized in that** the half-grooves (34a, 34b) are provided in the respective braces (7a, 7b).

11. Moulding device according to any one of Claims 1 to 10, **characterized in that** the blowing assembly (2) includes a base (20) surrounding the terminal part of the nozzle (16), and **in that** the female element (B) is fastened to said base (20).

12. Moulding device according to Claims 3, 4 and 11 together, **characterized in that** the female element (B) formed by the clamp (26) consists of two clamping pieces (26a, 26b) comprising said two substantially circularly arcuate frustoconical portions respectively, and **in that** the two clamping pieces (26a, 26b) are supported by the base (20) in a diametrically opposed manner.

13. Moulding device according to Claim 11 or 12, **characterized in that** the base (20), on the one hand, and the female element (B) formed by the clamp (26) or by each clamping piece (26a, 26b), on the other hand, are made of materials which are different, especially aluminium and steel respectively.

## Patentansprüche

1. Formvorrichtung zur Herstellung von Behältern aus thermoplastischem Material mittels Blasformen oder Streckblasen warmer Vorformlinge in einer Form (1), mit der eine Blasformeinheit (2) verbunden ist, wobei die genannte Form (1) mindestens zwei Formhälften (3a, 3b) umfasst, die zwischen einer Öffnungsstellung, in der die zwei Formhälften (3a, 3b) voneinander entfernt sind, und einer Schließstellung, in der die zwei Formhälften (3a, 3b) entlang einer Teilungsebene (P) aneinandergefügt sind und einen unteren Formenhohlraum (5) definieren, relativ zueinander bewegbar sind, wobei die genannte Blasformeinheit (2) eine Blasdüse (16) enthält und über der genannten Form (1) axial bewegbar ist zwischen einer hochgezogenen Stellung, in der das Ende der Düse (16) über die Form (1) angehoben ist, und einer abgesenkten Stellung bzw. Blasformstellung, in der das Ende der Düse (16) mit einem in dem Hohlraum (5) der Form getragenen Rohling, in Fluidverbindung steht, **dadurch gekennzeichnet,**
**dass** die zwei Formhälften (3a, 3b) auf oder in der Nähe von ihren jeweils der Blasdüse (16) zugewandten Flächen (9a, 9b) entsprechend zwei Teile (Aa, Ab) umfassen, die in der Schließstellung der Form zusammen ein männliches Element (A) definieren, das außen zumindest bereichsweise von einer in Richtung der Blasdüse (16) geneigten Seitenwand (11) eingefasst ist, und
**dass** die Blasformeinheit (2) ein weibliches Element (B) umfasst, das innen zumindest bereichsweise von einer komplementär zur Neigung der Seitenwand (11) des genannten männlichen Elements (A) geneigten Seitenwand (30) eingefasst ist, und das derart dimensioniert ist, dass es in der Blasformstellung der Blasformeinheit (2) das genannte männliche Element (A) der geschlossenen Form (1) eng umschließen kann,
wodurch die Zusammenarbeit des weiblichen Elements (B) und des männlichen Elements (A) eine Verriegelung des oberen Teils der Form (1) in der Schließstellung bewirkt.

2. Formvorrichtung nach Anspruch 1, **dadurch gekennzeichnet, dass** die äußere Seitenwand (11) des männlichen Elements (A) der Form (1) mindestens zwei kegelförmige Abschnitte (12) umfasst, die im Wesentlichen kreisbogenförmig sind und wechselseitig derart winklig angeordnet sind, dass sie im Wesentlichen abstandsgleich sind, und dass die innere Seitenwand (30) des weiblichen Elements (B) der Blasformeinheit (2) mindestens zwei kegelförmige Abschnitte umfasst, die im Wesentlichen kreisbogenförmig sind und wechselseitig derart winklig angeordnet sind, dass sie im Wesentlichen abstandsgleich sind und mit den jeweiligen genannten Abschnitten (12) der Seitenwand (11) des männlichen Elements (A) zusammenfallen.

3. Formvorrichtung nach Anspruch 2, **dadurch gekennzeichnet, dass** die äußere Seitenwand (11) des männlichen Elements (A) der Form (1) mindestens zwei kegelförmige Abschnitte (12) umfasst, die im Wesentlichen kreisbogenförmig sind und sich derart im Wesentlichen diametral gegenüber liegen, dass sie relativ zur Teilungsebene (P) der Form (1) im Wesentlichen symmetrisch sind, und dass die innere Seitenwand (30) des weiblichen Elements (B) der Blasformeinheit (2) mindestens zwei kegelförmige Abschnitte umfasst, die im Wesentlichen kreisförmig sind und sich unter Zusammenfallen mit den jeweiligen genannten Abschnitten (12) der Seitenwand (11) des männlichen Elements (A) im Wesentlichen diametral gegenüber liegen.

4. Formvorrichtung nach einem der Ansprüche 1 bis 3, **dadurch gekennzeichnet, dass** das weibliche Element (B) eine Spannvorrichtung (26) ist.

5. Formvorrichtung nach einem der Ansprüche 1 bis 4, **dadurch gekennzeichnet, dass** das männliche Element (A) aus dem oberen Teil der Form gebildet ist, die in Richtung der Blasdüse (16) geneigte Seitenwand (11) von der Außenwand des oberen Teils der Form (1) in der Schließstellung gebildet wird und dass das weibliche Element (B) derart dimensioniert ist, dass der obere Teil der Form (1) in der Schließstellung zumindest zum Teil abgedeckt wird.

6. Formvorrichtung nach einem der Ansprüche 1 bis 4, **dadurch gekennzeichnet, dass** das männliche Element (A) aus einem Höcker (10) gebildet ist, der in der Schließstellung der Form (1) von zwei Vorsprüngen (10a, 10b) definiert wird, die auf den jeweiligen der Blasdüse (16) zugewandten Flächen (9a, 9b) der Formhälften vorgesehen sind, und dass die in Richtung der Blasdüse (16) geneigte Seitenwand (11) von den zwei jeweiligen Seitenflächen der genannten Vorsprünge (10a, 10b) in der Schließstellung der Form (1) gebildet wird.

7. Formvorrichtung nach Anspruch 6, in der die Düse (16) eine Glockendüse ist, **dadurch gekennzeichnet, dass** der Höcker (10) der Form (1) im Wesentlichen flächig ist und eine Auflageplatte für die Glocke (17) der Düse (16) in der Blasformstellung bildet.

8. Formvorrichtung nach Anspruch 6 oder 7, in der jede Formhälfte (3a, 3b) eine innere Halbschale (6a, 6b) und ein äußeres, die Halbschale (6a, 6b) tragendes Winkelstück (7a, 7b) umfasst, **dadurch gekennzeichnet, dass** die Vorsprünge (10a, 10b) fest mit den jeweiligen Halbschalen (6a, 6b) verbunden sind.

9. Formvorrichtung nach einem der Ansprüche 1 bis 4, **dadurch gekennzeichnet, dass** das männliche Element (A) aus einem Kontakt (33) gebildet ist, der in der Schließstellung der Form (1) von zwei Halbnuten (34a, 34b) definiert ist, die auf den jeweiligen der Blasdüse (16) zugewandten Flächen (9a, 9b) der Formhälften (3a, 3b) vorgesehen sind, und dass die in Richtung der Blasdüse (16) geneigte Seitenwand (11) von den zwei unteren radialen Flächen (35a, 35b) der genannten Halbnuten (34a, 34b) in der Schließstellung der Form (1) gebildet ist.

10. Formvorrichtung nach Anspruch 9, in der jede Formhälfte (3a, 3b) eine innere Halbschale (6a, 6b) und ein äußeres, die Halbschale (6a, 6b) tragendes Winkelstück (7a, 7b) umfasst, **dadurch gekennzeichnet, dass** die Halbnuten (34a, 34b) in den jeweiligen Winkelstücken (7a, 7b) vorgesehen sind.

11. Formvorrichtung nach einem der Ansprüche 1 bis 10, **dadurch gekennzeichnet, dass** die Blasformeinheit (2) ein Formstück (20) umfasst, das den Endteil der Düse (16) einschließt, und dass das weibliche Element (B) fest mit dem genannten Formstück (20) verbunden ist.

12. Formvorrichtung nach der Gesamtheit der Ansprüche 3, 4 und 11, **dadurch gekennzeichnet, dass** das von der Spannvorrichtung (26) gebildete weibliche Element (B) aus zwei Spannbacken (26a, 26b) besteht, die jeweils die genannten zwei kegelförmigen Abschnitte (12) umfassen, die im Wesentlichen kreisbogenförmig sind, und dass die zwei Spannbacken (26a, 26b) von dem Formstück (20) einander diametral gegenüber liegend getragen sind.

13. Formvorrichtung nach Anspruch 11 oder 12, **dadurch gekennzeichnet, dass** das Formstück (20) einerseits und das von der Spannvorrichtung (26) oder jeder Spannbacke (26a, 26b) gebildete weibliche Element (B) andererseits aus unterschiedlichen Metallen, insbesondere aus Aluminium bzw. aus Stahl bestehen.
